(19) Europäisches Patentamt

European Patent Office

Office européen des brevets

(11) **EP 0 835 055 B1**

(12) **EUROPEAN PATENT SPECIFICATION**

(45) Date of publication and mention
of the grant of the patent:
**16.08.2001 Bulletin 2001/33**

(51) Int Cl.[7]: **A01N 47/12**
// (A01N47/12, 43:08)

(21) Application number: **96917592.6**

(22) Date of filing: **12.06.1996**

(86) International application number:
**PCT/GB96/01398**

(87) International publication number:
**WO 97/01280 (16.01.1997 Gazette 1997/04)**

(54) **FUNGICIDE MIXTURES**

FUNGIZIDE MISCHUNGEN

MELANGES FONGICIDES

(84) Designated Contracting States:
**AT BE CH DE DK ES FI FR GB GR IE IT LI LU NL
PT SE**

(30) Priority: **24.06.1995 GB 9512937**

(43) Date of publication of application:
**15.04.1998 Bulletin 1998/16**

(73) Proprietor: **Aventis CropScience UK Limited
Hauxton, Cambridge CB2 5HU (GB)**

(72) Inventor: **BARDSLEY, Richard, Andrew
Saffron Walden, Essex CB10 1XL (GB)**

(56) References cited:
• **C. TOMLIN (EDITOR): "The Pesticide Manual."
1994 , BCPC , FARNHAM,GB XP002018100 tenth
edition see entry numbers 515 and 579**

**Description**

Field of the invention

This invention relates to compositions with useful fungicidal properties.

The present invention provides a fungicidal composition comprising

a) propamocarb or an acid addition salt thereof and

b) ofurace.

Propamocarb is a known fungicide and is the common name for propyl 3-(dimethylamino)propylcarbamate. It is usually sold as the hydrochloride salt. Ofurace is a known fungicide and is the common name for $\alpha$-2-chloro-N-2,6-xylylacetamido-$\gamma$-butyrolactone.

We have found that the compositions of the invention have advantageous properties over the individual components and that synergism is often demonstrated, and yield of crop may be increased.

The ratios of the propamocarb to ofurace vary over a wide range but are usually in the range 20:1 to 1:1, preferably 10:1 to 2:1. These ratios are based on the weight of the free base.

In addition, other pesticides may be employed in conjunction with the active ingredients described above providing they do not adversely affect the interaction between the fungicidal components. For example it is sometimes useful to include additional fungicides, such as mancozeb, chlorothalonil, folpet, cymoxanil, captafol, maneb or zineb, which extend the range of activity in order to control a wider spectrum of fungi.

The compositions of the invention are active against a wide range of fungi, and especially phycomycetes such as *Plasmopara spp,* e.g. *Plasmopara viticola, Phytophthora spp.,* e.g. *Phytophthora infestans* and *Pythium spp.*. Crops that may be treated include for example, potatoes, tomatoes, vines, lettuce, hops, ornamentals, tobacco, strawberries, including seeds, bulbs and tubers.

The compositions of the invention may be employed in many forms and are often most conveniently prepared immediately prior to use by mixing the ingredients in their commercially available form, if necessary in a quantity of water.

In addition to tank mixing immediately prior to use the compositions containing propamocarb and ofurace may be formulated into a concentrate or in a ready for use form.

Suitable concentrates are generally those known in the art for the formulation of agrochemicals, for example, a solution, a dispersion, an aqueous emulsion, a dispersible powder, an emulsifiable concentrate or granules.

The concentration of the active ingredients (when used as the sole active components) in a composition for direct application to the crop by conventional methods is preferably within the range of 0.01 to 10 per cent by weight of the composition, especially 0.005 to 5 per cent by weight, but more concentrated compositions containing up to 40 per cent may be desirable.

The composition of the invention can be applied directly to plants by, for example, spraying either at the time which the fungus has begun to appear on the plant or before the appearance of fungus, as a protective measure. A suitable rate of application of the propamocarb is from 0.1 to 3 kilograms per hectare, preferably from 0.3 to 2.0 kilogram per hectare.

The invention thus includes a method for controlling a phytopathogenic fungus which comprises applying to seeds, plants and other vegetative material or their habitat a) propamocarb or an acid addition salt thereof and b) ofurace, components (a) and (b) being applied either together or in sequence.

The invention is illustrated in the following examples

Example 1

Potato plants were sprayed with appropriately diluted commercially available formulations of propamocarb hydrochloride and ofurace and mixtures of these. Ten replicates were used for each treatment. 24 Hours after treatment were then inoculated with *Phytophthora infestans* and kept under controlled environment conditions suitable for maintaining plant growth and development of the disease. After an appropriate time, the degree of infection of the leaf surface was visually estimated.

To indicate the existence of synergism between the active components the results were treated in the manner described by Colby S.R., "Calculating Synergistic and Antagonistic Responses of Herbicide Combinations" in Weeds 1967 15, 20-22). In this method the "expected" percent control of growth, E, of the combination compared with untreated control is given by the equation

$$E = A + F - \frac{AF}{100}$$

where A is the % control by propamocarb used alone at a given concentration and F is the % control by ofurace, used alone at a given concentration. If the observed control of the mixture is greater than E the results indicate synergism. The results are as follows. In the table Component P is propamocarb and component O is ofurace.

Table

| Component | Application rate (g cpd/ha) | % control | |
|---|---|---|---|
| | | observed | expected (E) |
| P | 600 | 5.6 | |
| O | 200 | 55.0 | |
| P + O | 600 + 200 | 80.6 | 58.0 |

Example 2

A wettable powder composition suitable for use after dilution with water was made up by mixing the following components.

| Component | g/l |
|---|---|
| propamocarb hydrochloride | 497.7 |
| ofurace | 40.4 |
| kaolin | 109.6 |
| silicone antifoam | 0.5 |
| sodium ligninsulfonate | 20 |
| xanthan gum | 2.5 |
| antimicrobial | 1.0 |
| water | 451.3 |

**Claims**

1.  A fungicidal composition comprising

    a) propamocarb or an acid addition salt thereof and
    b) ofurace.

2.  A composition according to claim 1 wherein the ratio of propamocarb to ofurace is in the range 20:1 to 1:1 based on the weight of the free base.

3.  A method for controlling a phytopathogenic fungus which comprises applying to seeds, plants and other vegetative material or their habitat

    a) propamocarb or an acid addition salt thereof and
    b) ofurace.

**Patentansprüche**

1.  Fungizide Zusammensetzung, die

    a) Propamocarb oder ein Säureadditionssalz von Propamocarb und
    b) Ofurac

    enthält.

2.  Zusammensetzung nach Anspruch 1, wobei das Verhältnis von Propamocarb zu Ofurac im Bereich von 20:1 bis 1:1 liegt, bezogen auf das das Gewicht der freien Base.

3. Verfahren zur Bekämpfung phytopathogener Pilze, das das Aufbringen von

    a) Propamocarb oder eines Säureadditionssalzes von Propamocarb und
    b) Ofurac

auf das Saatgut, die Pflanzen und andere Pflanzenmaterialien oder die Anbaufläche umfaßt.


**Revendications**

1. Composition fongicide comprenant

    a) du propamocarbe ou un sel d'addition acide de celui-ci et
    b) de l'ofurace.

2. Composition selon la revendication 1 dans laquelle la proportion de propamocarbe par rapport à l'ofurace est comprise entre 20:1 et 1:1, basé sur le poids de la base libre.

3. Méthode de lutte contre les champignons phytopathogènes comprenant l'application aux semences, plantes et autres matériaux végétatifs ou à leur habitat de :

    a) propamocarbe ou d'un sel d'addition acide de celui-ci et de
    b) ofurace.